# EUROPÄISCHE PATENTSCHRIFT

(11) **EP 1 059 006 B1**
(45) Veröffentlichungstag und Bekanntmachung des Hinweises auf die Patenterteilung: **19.04.2006**
(21) Anmeldenummer: 99915456.0
(22) Anmeldetag: 05.02.1999
(51) Int. Cl.: H04Q 3/00

(54) **VERFAHREN ZUM TESTEN DER ERREICHBARKEIT VON SIGNALISIERUNGSPUNKTEN EINES VERMITTLUNGSNETZES**
METHOD FOR TESTING THE AVAILABILITY OF THE SIGNALLING POINTS OF A SWITCHING NETWORK
PROCEDE POUR TESTER L'ACCESSIBILITE DES POINTS DE SIGNALISATION D'UN RESEAU DE COMMUTATION

(30) Priorität: 27.02.1998 DE 19808524
(43) Veröffentlichungstag der Anmeldung: 13.12.2000
(73) Patentinhaber: SIEMENS AKTIENGESELLSCHAFT, 80333 München (DE)
(72) Erfinder: SUERBAUM, Clemens, D-81541 München (DE)
(86) Internationale Anmeldenummer: PCT/DE1999/000308
(87) Internationale Veröffentlichungsnummer: WO 1999/044372

(56) Entgegenhaltungen:
- US-A- 4 745 593
- US-A- 5 583 848
- US-A- 5 715 294
- GLITHO R H: "ISOLATING FAULTY ROUTING TABLES IN SS7 NETWORKS: PRESENT AND FUTURE" IEEE COMMUNICATIONS MAGAZINE, Bd. 34, Nr. 5, 1. Mai 1996 (1996-05-01), Seiten 98-104, XP000574146

## Beschreibung

Der Anmeldungsgegenstand betrifft ein Verfahren zum Testen der Erreichbarkeit eines Ziel-Signalisierungspunktes (B) in einem mit einer Vielzahl von Signalisierungspunkten (A,....,Y) gebildeten Vermittlungsnetz, ausgehend von dem in den Recommendations Q. 751.1, Q. 753 und Q. 754 der ITU-T (International Telecommunication Union- Standards Sector) standardisierten MRVT (Message Transfer Part, Route Verification Test)-Protokollverfahren.

Aus der US-A-5583848 ist ein Verfahren zum Testen von Signalisierungspunkten in einem Vermittlungsnetz bekannt, das auf dem standardisierten MRVT-Testverfahren beruht und bei dem die Erreichbarkeit der Signalisierungspunkte unterschieden nach als "primary link" bezeichneten sowie als "alternative link" bezeichneten Signalisierungwegabschnitten feststellbar ist.

Der Anmeldungsgegenstand stellt sich die Aufgabe, ein Testverfahren anzugeben, das in einem Signalisierungsnetz in Echtzeit die tatsächlich verwendeten Signalisierungswegabschnitte (current routes) ermittelt.

Die Aufgabe wird durch ein Verfahren mit den im Patentanspruch 1 angegebenen Merkmalen gelöst.

Der Anmeldungsgegenstand stellt für einen Netzbetreiber Informationen zur Verfügung, anhand derer er prüfen kann, ob seine Planungsdaten auch im tatsächlichen Netz Realität werden. Es werden Informationen ermittelt, die in dieser einfachen Weise (d.h. z.B. ohne ein aufwändiges und schwer synchronisierbares Auslesen der aktuellen Netzdaten aus den verschiedenen Signalisierungspunkten) nicht zugänglich waren.

Die verwendeten Protokolle TCAP Transaction Capability Part und SCCP Signalling Connection Control Part) können unverändert weiterverwendet werden. Der anmeldungsgemäße erweiterte Test ist kompatibel zu den gegenwärtigen Standards. Der Anmeldungsgegenstand bildet einen Test, der eigentlich nur zur Prüfung semipermanenter Daten konzipiert wurde, derart weiter, daß er auch zur Ermittlung von transienten Daten im Signalisierungsnetz verwendbar ist. Mit der anmeldungsgemäßen Erweiterung des MRVT ist es möglich, ihn auch dazu zu benutzen, die gegenwärtig im Netz benutzten Signalisierungswege vom Testausgangspunkt zum Testziel herauszufinden.

Der Anmeldungsgegenstand wird im folgenden als Ausführungsbeispiel in einem zum Verständnis erforderlichen Umfang anhand von Figuren näher erläutert. Dabei zeigen:
- Fig 1: eine schematische Darstellung von Signalisierungspunkten eines Signalisierungsnetzes mit die Signalisierungspunkte verbindenden Signalisierungswegabschnitten,
- Fig 2: eine Tabelle, die die Erreichbarkeit und deren Art von mit einem jeweiligen Signalisierungspunkt verbundenen Signalisierungspunkten wiedergibt und
- Fig 3: eine Tabelle, die eine Zuordnung zwischen den einzelnen Signalisierungswegabschnitten und der Art der Signalisierungswegabschnitte wiedergibt.

In den Figuren bezeichnen gleiche Bezeichnungen gleiche Elemente.

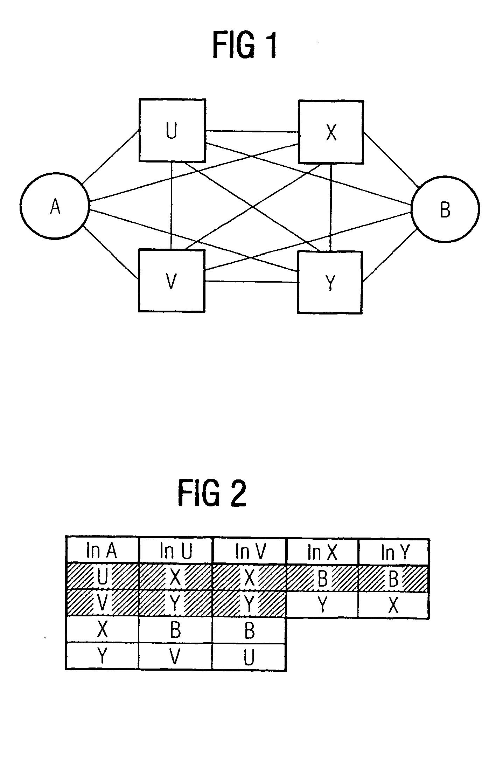

Fig 1 zeigt ein mit Signalisierungspunkten A..Y gebildetes Signalisierungsnetz eines Nachrichten in digitaler Form durchschaltenden Wählvermittlungsnetzes mit die Signalisierungspunkte verbindenden Signalisierungswegabschnitten.

Fig 2 zeigt eine Tabelle, in der für die einzelnen Signalisierungspunkte die zum Signalisierungspunkt B eingerichteten Signalisierungswegabschnitte wiedergegeben sind, wobei Signalisierungswegabschnitte, die zu in schraffierten Feldern angegebenen Signalisierungspunkten führen, tatsächlich verwendete Signalisierungswegabschnitte cR hoher Priorität, die in Fachkreisen auch als current routes bezeichnet werden, angeben.

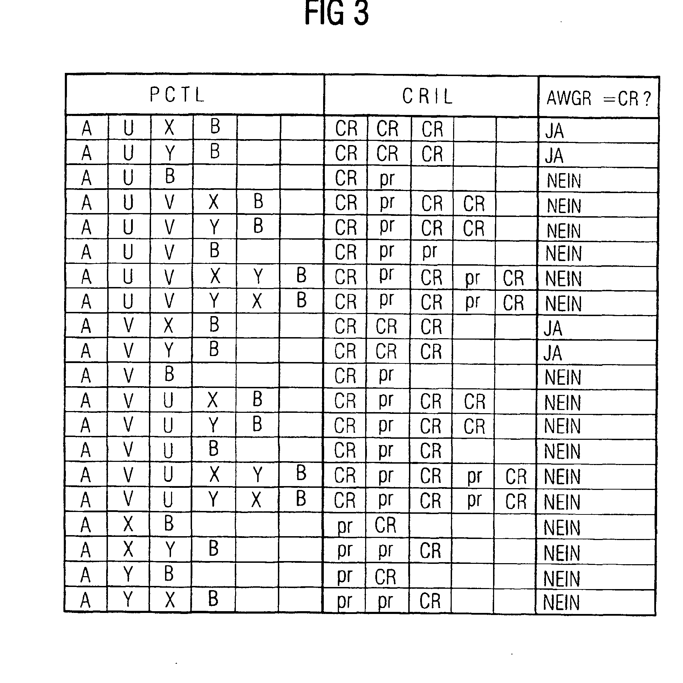

Fig 3 zeigt eine Tabelle, in der für das in Figur 1 dargestellte Signalisierungsnetz eine Zuordnung zwischen den in der Rubrik PCTL (für: Point Code Traversed List) angegebenen möglichen Signalisierungswegen, der in der Rubrik CRIL (für: Current Route Indicator List) angegebenen Art der dabei durchlaufenen Signalisierungswegabschnitte und dem in der Rubrik Auswertung Gesamtroute AWGR=CR? angegebeben Auswerteergebnis, ob die Gesamtroute eine tatsächlich verwendete Route ist, wiedergegeben ist.

Das bei der ITU-T in den Recommendations Q.751.1, Q.753 und Q.754 standardisierte Testverfahren MRVT (Message Transfer Part Route Verification Test) dient zur Prüfung der semipermanenten Routing Tabellen des Message Transfer Part (MTP). Dazu versendet und empfängt es im Schneeballsystem Testnachrichten. Die Testnachrichten mit den vollständigen Ergebnissen enthalten die Bezeichnungen der durchlaufenen Signalisierungspunkte, die in Fachkreisen auch als signalling point codes bezeichnet werden, entlang des Weges vom Testursprung zum Testziel sowie die zugehörigen Prioritäten der Abschnitte des Signalisierungsweges.

Rnmeldungsgemäß wird der in den Recommendations als erweiterbar definierte Parameter der Ergebnisnachricht um einen optionalen Parameter CRIL (für: currentRouteIndicatorList) erweitert (Die Testnachrichten sind in den entsprechenden Normen so definiert, daß sie erweiterbar sind). Dieser Parameter enthält eine geordnete Liste von Einträgen für tatsächlich benutzte Signalisierungswegabschnitte cR (für: currentRoute) / Einträgen für mögliche Signalisierungswegabschnitte pR (für: possibleRoute) / Einträgen mit einen unbekannten Wert angebenden Werten uk (für: unknown), die kennzeichnet, ob der zugehörige (also an einer Stelle in der pointCodeTraversedList PCTL weiter hinten stehende) Signalisierungspunkt über tatsächlich benutzte Signalisierungswegabschnitte cR erreicht worden wäre oder nicht. Der einen unbekannten Wert angebende Wert uk dient zur Erreichung von Kompatibilität mit MRVT-Signalisierungspunkten, die diesen Parameter nicht kennen. Wenn der MRVT-Mechanismus in einem Signalisierungspunkt erkennt, daß die Anzahl der Einträge (Länge) in der currentRouteIndicatorList CRIL kürzer ist als die die Anzahl der Einträge (Länge) in der pointCodeTraversedList PCTL, dann wird die currentRouteIndicatorList CRIL mit uk-Werten auf die vollständige Länge aufgefüllt. Dieses Vorgehen ist analog zur Behandlung des optionalen Parameters routePriorityList in der Recommendation Q.753.

Der jeweilige Wert wird wie folgt ermittelt:

Im Signalisierungspunkt, der den Test startet, z. B. Signalisierungspunkt A kann durch das bislang ungenutzte dritte Bit des erweiterbaren infoRequest Parameter gekennzeichnet werden, ob die currentRouteIndicatorList CRIL versorgt werden soll oder nicht, d.h. ob diese Erweiterung des MRVT genutzt werden soll (Bit gesetzt) oder nicht (Bit nicht gesetzt). Falls das Bit gesetzt ist, wird im Testausgangspunkt ermittelt, über welche der derzeit in Richtung Testziel möglichen Nachbarsignalisierungspunkte gegenwärtig wirklich geroutet wird. In die MRVT-Nachricht zu diesen trägt er den Wert CR 'currentRoute' in die currentRouteIndicatorList CRIL ein, für alle anderen den Wert PR 'possibleRoute' ein. In den Zwischenstationen auf dem Signalisierungsweg wird zusätzlich zu den sonst für den MRVT nötigen Abläufen die currentRouteIndicatorList CRIL analog wie im Testausgangspunkt erweitert. In Fehlerfällen wird sie in die Testnachrichten kopiert, die an den Ausgangspunkt des Test oder die vorige Zwischenstation zurückgesendet werden. All dies wird nur getan, wenn durch das dritte Bit im infoRequest Parameter die currentRouteIndicatorList CRIL in den empfangenen Testnachrichten angefordert war. War das Bit nicht gesetzt, läuft der MRVT unverändert ab. Ist ein herkömmlicher Signalisierungspunkt nicht in der Lage, die currentRouteIndicatorList CRIL zu erweitern, kopiert er sie unverändert in die von ihm auszusendenden Testnachrichten. Wenn dann ein später durchlaufener Signalisierungspunkt erkennt, daß die Länge der currentRouteIndicatorList kürzer ist als die pointCodeTraversedList der empfangenen Testnachricht, dann wird von ihm die currentRouteIndicatorList mit 'Unknown'-Werten auf die vollständige Länge aufgefüllt.

Im Testziel, z. B. Signalisierungspunkt B, wird die currentRouteIndicatorList CRIL in die Testnachrichten, die an die vorige Zwischenstation bzw. an den Ausgangspunkt zurückzusenden sind, ohne Erweiterung kopiert. Auch dies findet selbstverständlich nur statt, wenn durch das dritte Bit im infoRequest Parameter die currentRouteIndicatorList CRIL in der empfangenen Testnachricht angefordert war.

Die Testprozedur liest aus der Datenbasis, insbesondere der Routing Tabelle, nicht nur (wie beim derzeitig definierten MRVT) die Signalisierungspunkte, über die zum Testziel geroutet werden könnte, sondern auch diejenigen, über die gerade wirklich zu dem Testziel geroutet wird. Bei dem herstellerspezifischen Vermittlungssystem EWSD (Elektronisches Wählsystem Digital) wird dazu die interne Nummer des Ziels ermittelt und dann mit dieser die entsprechenden aktuellen transienten Einträge der Tabellen aus der High Performance Datenbase (HPDB) des Network Management auf dem MP:SM (Main Platform Signalling Manager) ausgelesen, wobei für die Standardversion des MRVT nur auf die semipermanenten Daten in der Application Database bzw. im Database Management System zugegriffen werden muß.

Nach Erhalt der Testresultate beim Signalisierungspunkt, an dem der Test gestartet wurde, kann wie folgt festgestellt werden, ob ein ermittelter möglicher Signalisierungsweg gegenwärtig wirklich in seiner Gesamtheit so im Netz benutzt wird: Dies ist nur der Fall, wenn die currentRouteIndicator-List ausschließlich CR 'currentRoute' als Werte enthält. Ist das Testziel ausschließlich über tatsächlich benutzte Signalisierungswegabschnitte CR erreicht worden, erfolgt in der Tabelle Fig 3 in der Spalte AWGR=CR? ein positiver Eintrag JA, ansonsten NEIN.

## Patentansprüche

1. Verfahren zum Testen der Erreichbarkeit eines Ziel-Signalisierungspunktes (B) in einem mit einer Vielzahl von Signalisierungspunkten (A,....,Y) gebildeten Vermittlungsnetz ausgehend von dem in den Recommendations Q. 751.1, Q. 753 und Q. 754 der ITU-T (International Telecommunication UnionStandards Sector) standardisierten MRVT (Message Transfer Part, Route Verification Test)-Protokollverfahren, bei dem
- Nachrichten im Schneeballsystem versendet und empfangen werden,
- die Nachrichten die Bezeichnungen der durchlaufenen Signalisierungspunkte sowie die zugehörigen Prioritäten der Abschnitte des Signalisierungsweges enthalten, demzufolge
- eine Ergebnisnachricht als erweiterbar definiert ist,
**dadurch gekennzeichnet, dass** der als erweiterbar definierte Parameter der Ergebnisnachricht Informationen über die Art der Erreichbarkeit der Signalisierungspunkte auf den die Signalisierungspunkte verbindenden Signalisierungswegabschnitten aufweist, und
die Informationen durch Einträge cRIL (für: Current Route Indicator List) gegeben sind, die die Erreichbarkeit über einen hochprioren Signalisierungswegabschnitt cR (für: Current Route) oder über einen niederprioren Signalisierungswegabschnitt pR (für: possible Route) angeben.

2. Verfahren nach Anspruch 1,
**dadurch gekennzeichnet, dass**
der Ergebnisnachricht bei der Weiterleitung von Signalisierungspunkt zu Signalisierungspunkt ein den betreffenden Signalisierungswegabschnitt als niederprior pR bzw. hochprior cR charakterisierender Eintrag hinzugefügt wird.

3. Verfahren nach einem der vorstehenden Ansprüche,
**dadurch gekennzeichnet , dass**
ein Signalisierungspunkt, der eine Differenz zwischen seiner Rangfolge in der Reihenfolge der von der Ergebnisnachricht durchlaufenen Signalisierungspunkte und der Anzahl der Einträge in der Ergebnisnachricht feststellt, der Ergebnisnachricht eine der Differenz entsprechende Anzahl von Einträgen mit einen unbekannten Wert angebenden Werten uk (für: unknown) hinzufügt.

## Claims

1. Method for testing the availability of a destination signalling point (B) in a switching network comprising a plurality of signalling points (A,...,Y), based upon the MRVT (Message Transfer Part Route Verification Test) protocol standardized in Recommendations Q. 751.1, Q. 753 and Q. 754 of the ITU-T (International Telecommunication Union Standards Sector), in which
- messages are sent and received using a snowball system,
- the messages contain the designations of the signalling points traversed and the relevant priorities of the sections of the signalling route,
according to which
- a result message is defined as extensible
**characterized in that**
the parameter of the result message, which parameter is defined as extensible, has information about the type of availability of the signalling points on the sections of the signalling route linking the signalling points, and
the information is given by cRIL (Current Route Indicator List) entries, which specify the availability via a high-priority section of the signalling route cR (current route) or via a low-priority section of the signalling route pR (possible route).

2. Method according to Claim 1,
**characterized in that**
an entry characterizing the relevant section of the signalling route as low-priority pR or high-priority cR is added to the result message when it is forwarded from signalling point to signalling point.

3. Method according to any one of the preceding claims,
**characterized in that**
a signalling point which identifies a difference between its ranking in the order of signalling points traversed by the result message and the number of entries in the result message then adds to the result message a number, corresponding to said difference, of entries with values uk (unknown), indicating an unknown value.

## Revendications

1. Procédé pour tester la possibilité d'accéder à un point de signalisation cible (B) dans un réseau de commutation formé avec une pluralité de points de signalisation (A, ..., Y) à partir du procédé de protocole MRVT (Message Transfer Part, Route Verification Test) standardisé dans les Recommendations Q. 751.1, Q. 753 et Q. 754 de la ITU-T (International Telecommunication UnionStandards Sector), dans lequel
- des messages sont envoyés et reçus dans le système de boule de neige
- les messages contiennent les désignations des points de signalisation traversés ainsi que les priorités spécifiques des tronçons de la voie de signalisation,
en conséquence
- un message de résultat est défini comme extensible,
**caractérisé en ce que** le paramètre défini comme extensible du message de résultat présente des informations sur la façon de pouvoir atteindre les points de signalisation sur les tronçons de voie de signalisation reliant les points de signalisation, et les informations sont données par des inscriptions cRIL (pour : Current Route Indicator List), qui indiquent la possibilité d'accéder par un tronçon de voie de signalisation cR (pour : Current Route) à haute priorité ou par un tronçon de voie de signalisation pR (pour : possible Route) à faible priorité.

2. Procédé selon la revendication 1,
**caractérisé en ce que**,
une inscription caractérisant le tronçon de voie de signalisation concerné comme à faible priorité pR resp. à haute priorité cR est ajouté au message de résultat lors de la transmission d'un point de signalisation à un autre.

3. Procédé selon l'une quelconque des revendications précédentes,
**caractérisé en ce que**,
un point de signalisation, qui constate une différence entre son ordre de priorité dans l'ordre de succession des points de signalisation traversés par le message de résultat et le nombre des inscriptions dans le message de résultat, ajoute un nombre, correspondant à la différence, d'inscriptions avec des valeurs uk (pour : unknown) indiquant une valeur inconnue au message de résultat.
